# EUROPÄISCHE PATENTSCHRIFT

(11) **EP 0 591 719 B1**
(45) Veröffentlichungstag und Bekanntmachung des Hinweises auf die Patenterteilung: **13.03.1996**
(21) Anmeldenummer: 93114791.2
(22) Anmeldetag: 15.09.1993
(51) Int. Cl.: B62D 21/02, B60K 5/02, B60G 7/02

(54) **Nutzfahrzeug, insbesondere Frontlenker-Lastkraftwagen**
Commercial vehicle, especially a cab over lorry engine
Véhicule utilitaire, notamment un camion à cabine avancée

(30) Priorität: 09.10.1992 DE 4234138
(43) Veröffentlichungstag der Anmeldung: 13.04.1994
(73) Patentinhaber: MAN Nutzfahrzeuge Aktiengesellschaft, D-80976 München (DE)
(72) Erfinder: Rieck, Gerhard, Dipl.-Ing., D-81247 München (DE); Mertens, Armin, D-80993 München (DE); Schmolly, Ingo, Dipl.-Ing. (FH), D-85757 Karlsfeld (DE)

(56) Entgegenhaltungen:
- BE-A- 647 435
- CH-A- 301 316
- DE-A- 3 312 446
- DE-A- 4 019 796
- FR-A- 2 214 281
- FR-A- 2 240 138
- FR-A- 2 308 539
- FR-A- 2 667 839
- US-A- 1 894 602
- US-A- 2 129 232
- US-A- 3 052 313

## Beschreibung

Die Erfindung betrifft einen Lastkraftwagen, insbesondere der Frontlenker-Bauart, zur Bildung eines Nutzfahrzeuges mit Merkmalen der im Oberbegriff des Anspruchs 1 angegebenen Art.

Wie beispielsweise aus der FR-A-23 08 539 bekannt, weisen Lastkraftwagen unabhängig von ihrer Bauart üblicherweise ein Fahrgestell auf, dessen Rahmen aus zwei mit ihrer Oberkante in einer horizontalen Ebene liegenden Längsträgern besteht, die über mehrere Querträger verbunden sind. Bedingt durch diese Ausgestaltung und Anordnung der Rahmen-Längsträger und deren Höhen-Niveau zwischen Fahrbahn und Oberkante ist auch regelmäßig die Einbaulage des Antriebsaggregates und die Anbauhöhe des Fahrerhauses mit entsprechendem Abstand zwischen Fahrbahn und Fahrerhausboden festgelegt. Durch die Anbauhöhe des Fahrerhauses ist wiederum die Höhe der Einstiege festgelegt. Hohe Einstiege erschweren den Zutritt zum Fahrerhaus.

Darüber hinaus weisen Lastkraftwagen in der Regel unabhängig von ihrer Bauart eine starre Vorderachse auf, weil diese eine relativ günstige Unterbringungsmöglichkeit für die Federungs- und Anlenkungsorgane erlaubt. Einzelradaufhängungen sind dagegen schon ihrer Natur nach wesentlich komplizierter, erfordern mehr Raum als Starrachsaufhängungen und kamen daher in der Regel nur bei Omnibussen und leichten, nicht aber bei schweren Lastkraftwagen zur Anwendung.

Es ist Aufgabe der Erfindung, einen Lastkraftwagen der eingangs genannten Art dahingehend zu verbessern, daß das Antriebsaggregat gegenüber herkömmlichen Anordnungen günstiger, insbesondere tiefer einbaubar ist und außerdem für die gegebenenfalls auch angetriebenen Vorderräder eine platzsparende sowie kostengünstige Einzelradaufhängung realisierbar ist.

Diese Aufgabe ist erfindungsgemäß durch einen Lastkraftwagen mit den im Kennzeichen des Anspruches 1 angegebenen Merkmalen gelöst.

Vorteilhafte Ausgestaltungen dieser Lösung sind in den Unteransprüchen angegeben.

Dadurch, daß der Rahmen vordere Längsträger-Abschnitte aufweist, die zur Bildung eines (von vorn gesehen) V-förmigen Einbaubereiches für das Antriebsaggregat in sich von der Vertikalen abweichend zumindest partiell schräg gestellt sind, ist ein vergrößerter Einbauraum geschaffen, der eine vergleichsweise tiefe Anordnung des Antriebsaggregates zwischen den Rahmen-Längsträgern und infolge dessen auch eine Tieferlegung des Fahrerhauses ermöglicht, wodurch sich dessen Einstiegshöhe reduziert. Dadurch, daß die vorderen Längsträger-Abschnitte außerdem mit speziellen Aus- und Einbuchtungen versehen und spezielle Querträger vorgesehen sind, ist auch eine sehr vorteilhafte, weil raumsparende und gleichzeitig auch relativ preisgünstige Einzelradaufhängung für die Vorderräder mit direkter Anlenkung besonders gestalteter Dreiecks-Querlenker sowie eine günstige Anlenkung der erforderlichen Federungsorgane realisierbar. Insbesondere sind an den vorderen Längsträger-Abschnitten keine separaten Lagerböcke oder sonstigen Anschlußorgane, die extra vorzufertigen und dann anzubringen wären, für die Anbindung der Einzelradaufhängungs- und - federungsorgane notwendig. Es verkompliziert sich lediglich die Form der vorderen Längsträger-Abschnitte, die Kosten der teureren Preßwerkzeuge werden aber z. B. durch Entfall der nicht notwendigen Lagerböcke mehr als kompensiert.

Nachstehend ist die erfindungsgemäße Lösung anhand mehrerer in der Zeichnung dargestellter Ausführungsbeispiele näher erläutert. In der Zeichnung zeigen:
- Fig. 1 bis 7: schematisiert je einen Frontlenker-Lastkraftwagen in Seitenansicht (ohne Auf- und Anbauten), an dem die erfindungsgemäße Rahmenkonstruktion und Einzelradaufhängung gegeben ist,
- Fig. 8: einen schematischen Querschnitt durch die Ausführungsform gemäß Fig. 3 und 4,
- Fig. 9 bis 12: je eine Variante für die Querträgerverbindung zwischen beiden Rahmen-Längsträgern, zugehörig zu Rahmenkonstruktionen gemäß Fig. 2 bis 7,
- Fig. 13: in Draufsicht schematisiert den hinteren Fahrgestell-/Rahmenbereich zugehörig zu den Fahrzeugen gemäß Fig. 4 bis 7,
- Fig. 14: in Draufsicht schematisiert eine Heckbereichsvariante für die Fahrzeuge gemäß Fig. 4 bis 7,
- Fig. 15: in Vorderansicht eine Ausführungsform der erfindungsgemäßen Rahmenkonstruktion und Einzelradaufhängung,
- Fig. 16: den Schnitt B-B aus Fig. 15,
- Fig. 17: den Schnitt A-A aus Fig. 15,
- Fig. 18: die Einzelradaufhängung gemäß Fig. 15 in einer anderen Quer-Hoch-Ebene,
- Fig. 19: einen den Ausführungsformen gemäß Fig. 2, 3, 4, 5 und 15 zugehörigen vorderen Längsträgerabschnitt in Seitenansicht,
- Fig. 20: den vorderen Längsträger-Abschnitt gemäß Fig. 19 in Draufsicht,
- Fig. 21: den Schnitt A-A aus Fig. 19,
- Fig. 22: den Schnitt B-B aus Fig. 19,
- Fig. 23: den Schnitt C-C aus Fig. 19,
- Fig. 24: in Draufsicht die Einzelradaufhängung gemäß Fig. 15 für ein Rad,
- Fig. 25: die Anlenkung eines oberen Dreiecks-Querlenkers aus Fig. 15 im Detail, und
- Fig. 26: schematisiert eine Ergänzung der erfindungsgemäßen Rahmenkonstruktion und Einzelradaufhängung am Nutzfahrzeug in Seitenansicht.

In den Figuren sind gleiche bzw. einander entsprechende Bauteile mit gleichen Bezugszeichen angezogen.

Die erfindungsgemäße Konstruktion kann bei jeder Art von Nutzfahrzeug zur Anwendung kommen, wobei die Basis ein Fahrgestell für einen Lastkraftwagen der Frontlenker- oder Hauber-Bauart ist, das durch die verschiedensten Auf- und Anbauten dem jeweiligen Einsatzzweck entsprechend ergänzbar ist, zum Beispiel mit Pritschenaufbau, Kastenaufbau, Planenaufbau, Sattelkupplung, Feuerwehraufbauten, Müllsammelaufbauten, Tankaufbauten und dergleichen.

Das Fahrgestell des Nutzfahrzeuges weist einen Rahmen 1 auf, der aus zwei bauartgleichen, über Querträger miteinander verbundenen Längsträgern 2, 3 besteht. Vom Fahrgestell werden ein Antriebsaggregat 4 - eingebaut zwischen den Längsträgern 2, 3 -, ein Fahrerhaus 5, dessen Boden mit 6 und Rückwand mit 7 bezeichnet ist, sowie weitere Aggregate/Anbauteile getragen. Die Hinterachse des Fahrzeugs ist insgesamt mit 8 bezeichnet.

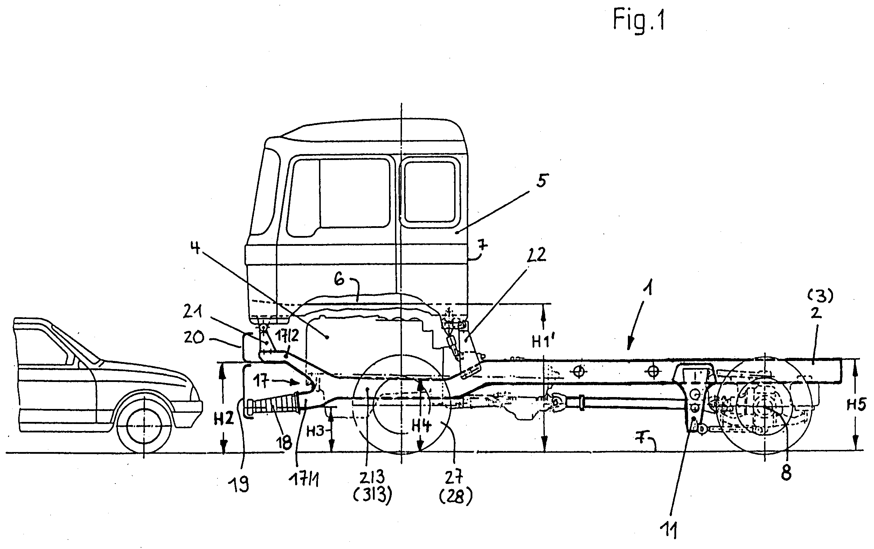

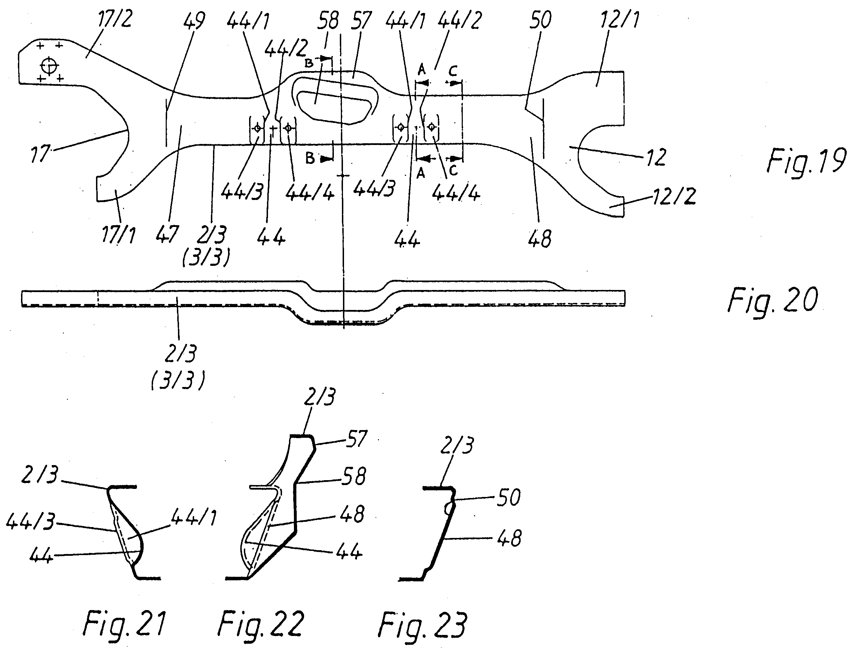

Bei bekannten Nutzfahrzeugen bestimmt der Abstand H5 zwischen Fahrbahn F und durchgehend ebener Oberkante der Rahmen-Längsträger 2, 3 die Einbauhöhe des Antriebsaggregates 4 und damit auch die Anbauhöhe des Fahrerhauses 5. Demgegenüber weist der erfindungsgemäße Rahmen 1 vordere Längsträger-Abschnitte 2/3, 3/3 auf, die -wie gut aus 15 ersichtlich - zur Bildung eines von vorn gesehen V-förmigen Einbaubereiches für das Antriebsaggregat 4 in sich von der Vertikalen abweichend partiell schräg gestellt sind (siehe auch Fig. 21, 22, 23). Dadurch sind die vorderen Längsträger-Abschnitte 2/3, 3/3 obergurtseitig weiter voneinander beabstandet als untergurtseitig, was einen tieferen Einbau des Antriebsaggregates 4 und damit einhergehend auch einen entsprechend abgesenkten Anbau des Fahrerhauses 5 am Rahmen 1 ermöglicht. Eine noch größere Absenkung des Antriebsaggregates 4 und gegebenenfalls auch des Fahrerhauses 5 ist dann möglich, wenn der Rahmen 1 mit seinen vorderen, im Bereich des Antriebsaggregates 4 und Fahrerhauses 5 gegebenen Längsträger-Abschnitten 2/3, 3/3 auch noch zumindest partiell gegenüber der im hinteren Fahrgestell-Bereich gegebenen Rahmen-Höhe H5 abgesenkt wird, und zwar auf ein Höhen-Niveau H4, das 0,6 - 0,9 H5 beträgt.Dadurch ist das Antriebsaggregat 4 um ein entsprechendes Differenzmaß (0,4 - 0,1 H5) tiefer gelegt zwischen den beiden Rahmen-Längsträgern 2, 3 und ebenso das Fahrerhaus 5 um ein entsprechendes Differenzmaß tiefer gesetzt am Rahmen 1 anbaubar, wobei sich dann zwischen Fahrerhaus-Boden 6 und Fahrbahn F ein in der Zeichnung mit H1' angegebenes, reduziertes Abstands-Maß ergibt. Beispiele für diese vorteilhafte Tieferlegung von Antriebsaggregat 4 und Fahrerhaus 5 sind in den Fig. 1 bis 7 dargestellt und nachfolgend näher erläutert.

Das Tieferlegen der vorderen Rahmen-Abschnitte 2/3, 3/3 kann dadurch realisiert werden, daß die beiden Rahmen-Längsträger 2, 3 - wie aus den dargestellten Ausführungsbeispielen ersichtlich - beginnend etwa im Bereich der Fahrerhaus-Rückwand 7 und ausgehend von der im hinteren Fahrgestellbereich gegebenen Rahmen-Höhe H5 schräg nach unten gezogen sind und sich dann zumindest abschnittsweise auf dem tieferen Höhen-Niveau H4 verlaufend als abgesenkte Längsträger-Abschnitte 2/3, 3/3 nach vorne erstrecken.

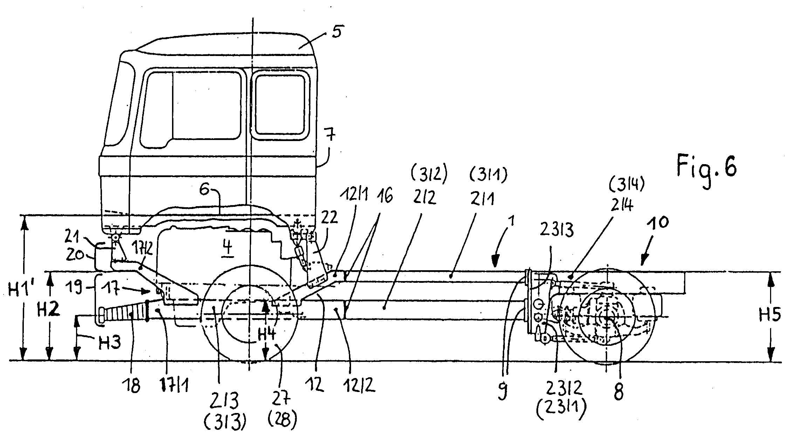

Das Nach-unten-ziehen der beiden Rahmen-Längsträger 2, 3 kann durch entsprechendes Abkröpfen derselben (siehe Fig. 1 bis 5) oder durch Einschweißen eines schrägen Trägerteiles zwischen höher und tiefer liegendem Längsträger-Abschnitt (siehe Fig. 6) realisiert sein. Bei der fertigungstechnisch einfachsten Lösung gemäß Fig. 1 wird dabei jeder der beiden Längsträger 2, 3 durch ein einstückiges Blechpreßteil realisiert. Bei den übrigen in der Zeichnung dargestellten Ausführungsformen ist eine aufwendigere Konstruktion im hinteren Bereich des Rahmens vorgesehen. Hierbei ist generell jeder der beiden Längsträger 2, 3 etwa ab der Fahrerhaus-Rückwand 7 in ein oberes Längsträgerteil 2/1, 3/1 und ein hierzu im wesentlichen parallel verlaufendes unteres Längsträger-Teil 2/2, 3/2 aufgelöst. Dabei können die beiden Teile eines jeden Längsträgers 2, 3 jeweils entweder auf gleichen Querschnitt und gleiche Querschnitts-Höhe oder unterschiedlichen Querschnitt und unterschiedliche Querschnitts-Höhe ausgelegt sein, wobei in letzterem Fall das querschnittsgrößere und querschnittshöhere Teil das obere oder das untere Teil des jeweiligen Längsträgers 2, 3 sein kann.

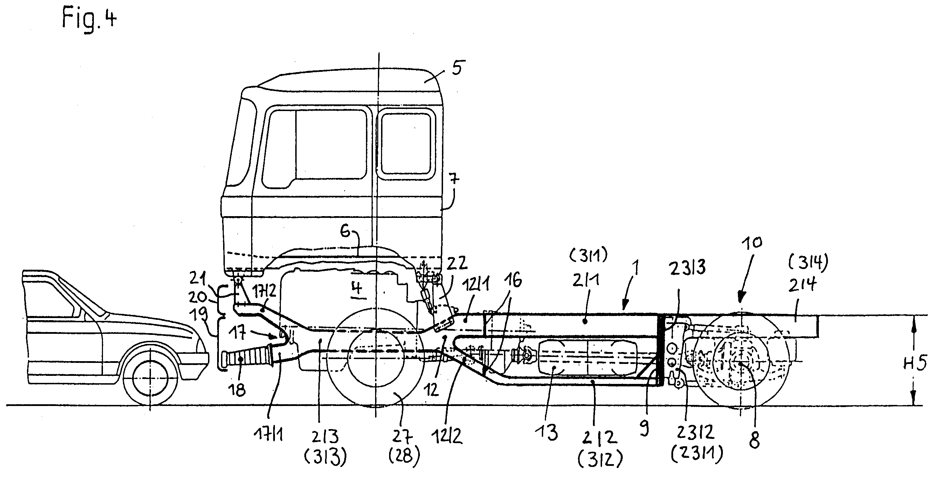

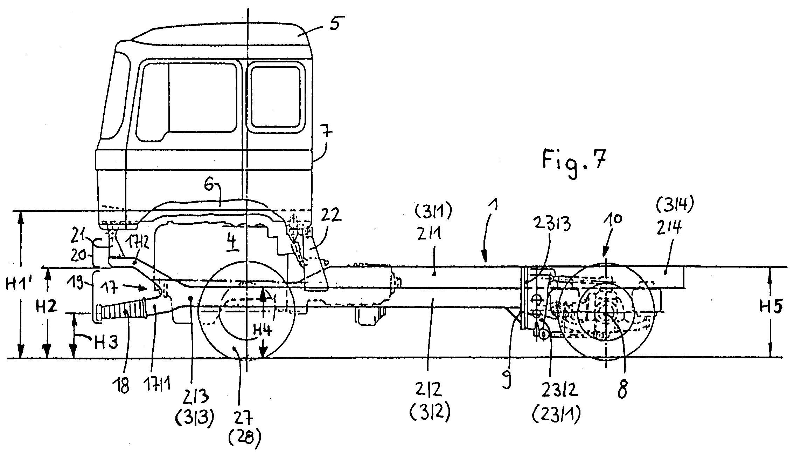

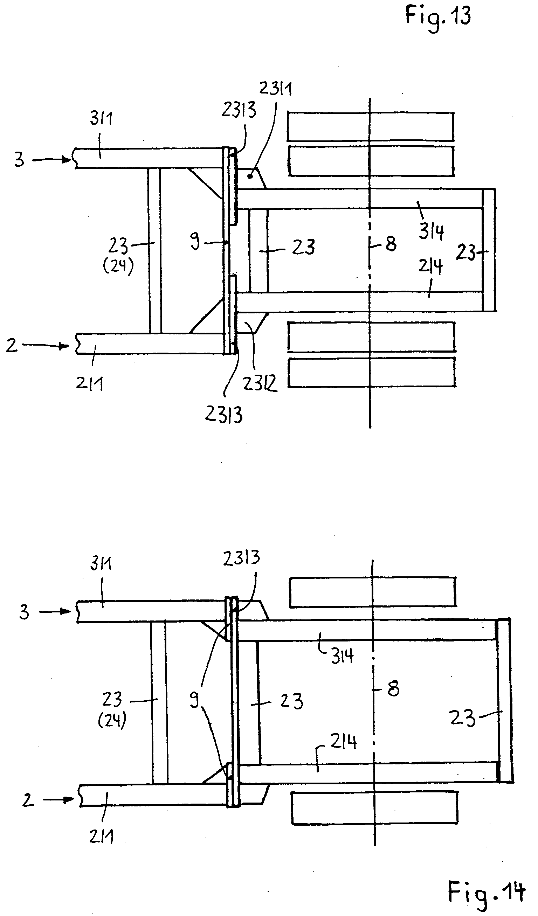

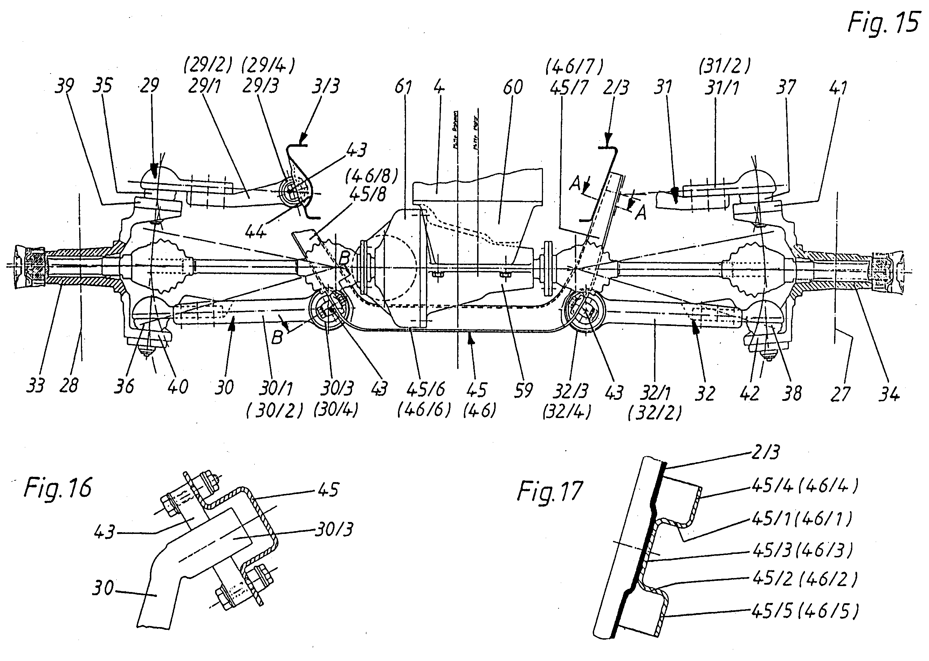

Im Fall gemäß Fig. 6 verläuft das jeweils untere Teil 2/2, 3/2 jedes Längsträgers 2, 3 in gerader Verlängerung zum abgesenkten vorderen Abschnitt 2/3, 3/3 desselben, d.h. die Oberkanten fluchten auf dem tiefer gelegten Höhen-Niveau H4, und erstreckt sich nach hinten bis vor die (erste, vordere) Hinterachse 8. Im Fall gemäß Fig. 7 ist der jeweils untere Abschnitt 2/2, 3/2 jedes aufgeteilten Längsträgers 2, 3 in gerader Verlängerung mit dem vorderen abgesenkten Längsträger-Abschnitt 2/3, 3/3 einstückig ausgebildet und endet hinten vor der (ersten, vorderen) Hinterachse 8. Das jeweils obere Teil 2/1, 3/1 jedes Längsträgers 2, 3 kann sich ebenfalls entweder nur bis vor die (erste, vordere) Hinterachse 8 erstrecken und dort mit Anschlußorganen 9, wie eine Platte oder Flansche, versehen und über diese mit dem Fahrgestell-Heck 10 verbunden sein. In diesen Fällen (siehe Fig. 4 bis 7 und 13, 14) ist das Fahrgestell-Heck 10, bestehend aus Rahmenendstück und Hinterachse(n) 8 als Modul zumindest weitestgehend vormontierbar und dann am davor gegebenen Fahrgestellabschnitt über Schraub- oder Nietverbindungen befestigbar. Dieses ermöglicht - wie ein Vergleich zwischen Fig. 13 und 14 zeigt - im Fahrgestell-Heck 10 unterschiedliche Rahmen-Längen und -Breiten und somit eine bestmögliche Anpassung an unterschiedliche Nutzfahrzeug-Typen bzw. -Einsatzzwecke. Dabei ist das Rahmenendstück - wie aus Fig. 13 und 14 ersichtlich - durch sich an den oberen Längsträger-Teilen 2/1, 3/1 in deren Höhe anschließende und durch wenigstens einen Querträger 23 verbundene Längsträger-Teile 2/4 bzw. 3/4 gebildet. Für die Anlenkung von Hinterachsaufhängungsorganen sind dabei außen an den Längsträger-Teilen 2/4, 3/4 jeweils Lagerschilde 23/1, 23/2 vorgesehen. Frontseitig der letzteren sowie der Längsträger-Teile 2/4, 3/4 ist verbunden mit diesen Teilen eine Anschlußplatte bzw. sind Anschlußflansche 23/3 gegeben, die bei der Verbindung des vormontierten Fahrgestell-Hecks 10 an den endseitig der Längsträgerteile 2/1, 2/2, 3/1, 3/2 gegebenen Anschlußorganen 9 zur Anlage kommt/kommen und über Schraub- oder Nietverbindungen aneinander angeschlossen werden.

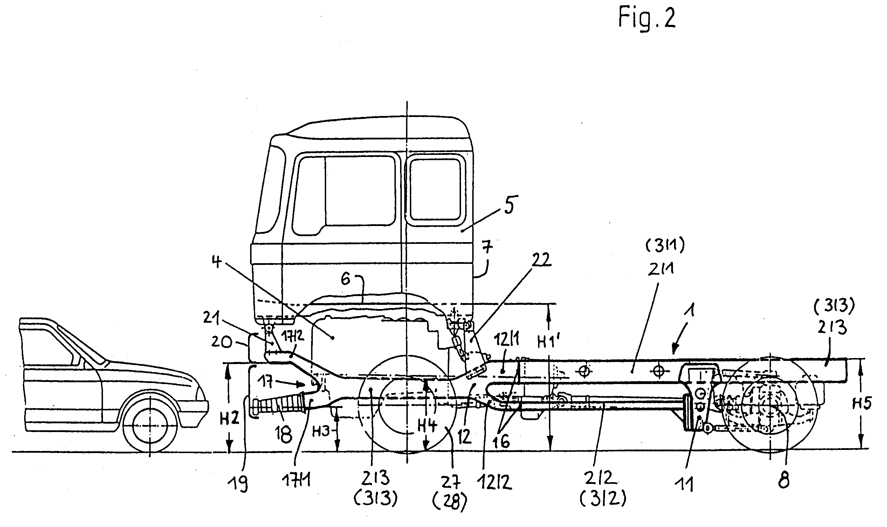

Alternativ hierzu kann das jeweils obere Teil 2/1, 3/1 jedes Längsträgers 2, 3 aber auch über die Hinterachsanordnung hinaus bis zum Fahrzeugheck verlängert sein (siehe Fig. 2 bis 3). Die beiden Teile jedes Rahmen-Längsträgers 2, 3 sind in diesem Fall über jeweils einen Lagerschild 11 miteinander verbunden, der gleichzeitig als Lagerorgan für Anlenkungsorgane der Hinterachse(n) 8 dient.

Im Fall gemäß Fig. 7 sind die beiden Teile 2/1, 2/2 bzw. 3/1, 3/2 jedes Längsträgers 2, 3 jeweils ohne Abstand aneinander anliegend miteinander verbunden, das jeweils obere Längsträger-Teiles 2/1, 3/1 beginnt etwa in Höhe der Fahrerhaus-Rückwand 7.

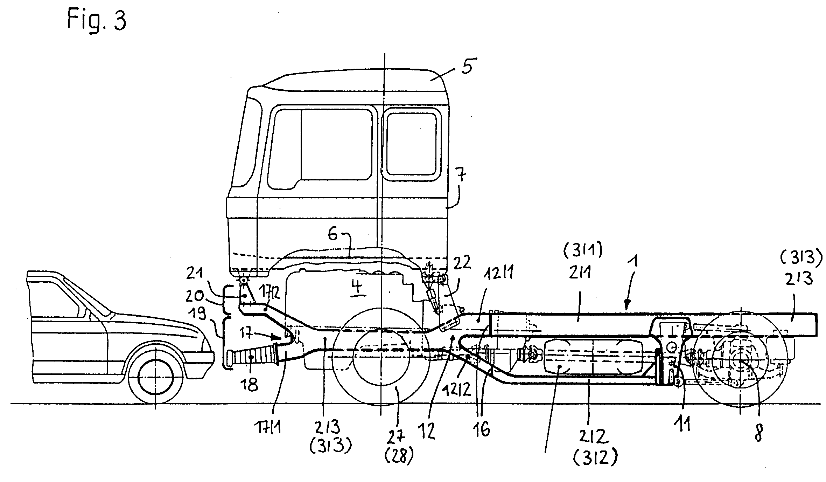

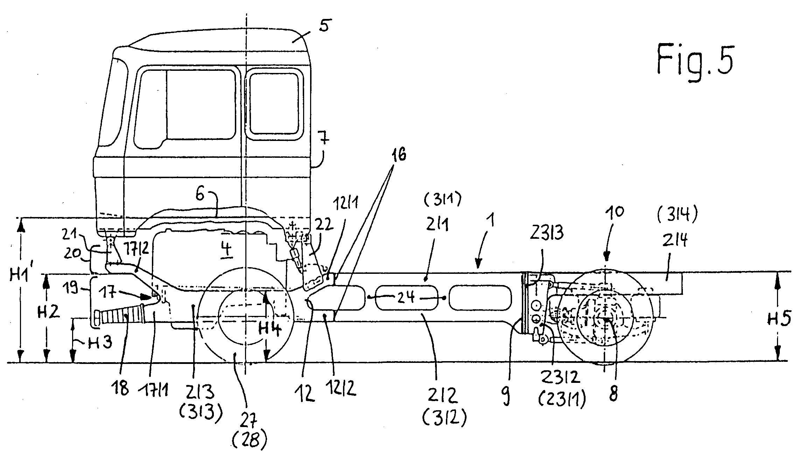

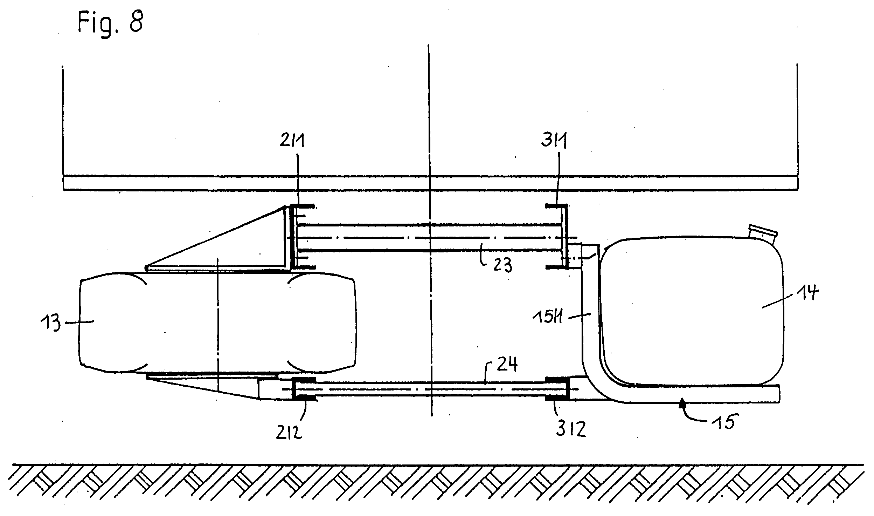

Bei den übrigen dargestellten Ausführungsformen mit zweigeteilten Längsträgern 2, 3 (Fig. 2 bis 6) verlaufen die jeweils beiden Längsträger-Teile 2/1, 2/2 bzw. 3/1, 3/2 jeweils mit größerem Abstand im wesentlichen parallel zueinander. In diesen Fällen ist jeder der beiden Längsträger 2, 3 am hinteren Ende seines tiefer gelegten vorderen Abschnittes 2/3, 3/3 etwa im Bereich der Fahrerhaus-Rückwand 7 mit einer Vertikal-Gabelung 12 versehen, wobei sich am jeweiligen, den schräg nach unten gehenden Abschnitt des jeweiligen Längsträgers 2, 3 enthaltenden oberen Gabel-Teil 12/1 auf Rahmen-Höhe H5 das obere Teil 2/1 bzw. 3/1 und am jeweils unteren Gabel-Teil 12/2 das untere Träger-Teil 2/2 bzw. 3/2 des jeweiligen Längsträgers 2, 3 anschließt. Bei den Ausführungsbeispielen gemäß Fig. 5 und 6 sind die Unterkanten des jeweils tiefer gelegten vorderen Längsträger-Abschnittes 2/3 bzw. 3/3, des zugehörigen unteren Gabel-Teils 12/2 und des anschließenden unteren Längsträger-Teils 2/2 bzw. 3/2 in einer Ebene verlaufend angeordnet. Bei den anderen Ausführungsformen gemäß Fig. 2, 3, 4 mit zwei geteilten Längsträgern 2, 3 dagegen verlaufen die Oberkanten der jeweils oberen Längsträger-Teile 2/1, 3/1 in einer von der Oberkante des tiefer gelegten vorderen Längsträger-Abschnittes 2/3 bzw. 3/3 nach oben beabstandeten Ebene und die Unterkanten der unteren Längsträger-Teile 2/2 bzw. 3/2 in einer Ebene, die tiefer liegt als die die Unterkante des tiefer gelegten vorderen Längsträger-Abschnittes 2/3 bzw. 3/3 einschließende Ebene. Im Fall der Ausführungsbeispiele gemäß Fig. 3 und 4 ist das untere Teil 2/2 bzw. 3/2 eines Längsträgers 2, 3 soweit nach unten verlegt, daß zwischen beiden Längsträger-Teilen 2/1, 2/2 bzw. 3/1, 3/2 ein Ersatzrad 13 quer und/oder andere Fahrzeugteile wie Kraftstofftanks, Druckluftvorratsbehälter, Batteriekästen, Staukästen und dergleichen einbaubar sind. Wie aus Fig. 8 ersichtlich, ist aufgrund der Zweiteilung der Rahmen-Längsträger 2, 3 auch eine günstigere Lagerung von Fahrzeugteilen 14 wie Kraftstoff- bzw. Druckluftbehältern, Batteriekästen, Staukästen und dergleichen außen am Rahmen möglich, weil die hierfür vorgesehenen Befestigungsorgane, z. B. Winkelhalter 15 mit ihrem Anschlußschenkel 15/1 an beiden Träger-Teilen 2/1, 2/2 bzw. 3/1, 3/2 abgestützt anliegend befestigbar sind. Im Falle der zweiteiligen Ausgestaltung des mittleren Längsträger-Bereiches können die jeweils beiden Teile 2/1, 2/2 bzw. 3/1, 3/2 - wie beispielsweise aus Fig. 5 ersichtlich - zur Erhöhung der Rahmenfestigkeit über Streben 24 miteinander verbunden sein. Dabei kann dieser Abschnitt des Rahmens entweder durch eine Schweißkonstruktion oder ein Blechpreßteil (wie in Fig. 5 dargestellt) realisiert sein.

Bei allen Ausführungsbeispielen gemäß den Fig. 2 bis 6 sind die beiden Teile 2/1, 2/2 bzw. 3/1, 3/2 jedes Rahmen-Längsträgers 2, 3 mit den Gabelteilen 12/1, 12/2 am vorderen Längsträger-Abschnitt 2/3, 3/3 über Schraub- oder Nietverbindungen verbunden, die entsprechenden Schnittstellen sind in der Zeichnung mit 16 bezeichnet. Dies erlaubt es, daß das Fahrgestell-Vorderteil mit Fahrerhaus 5, Antriebsaggregat 4 und Nebenaggregaten als Modul unabhängig vom restlichen Fahrgestell vormontierbar und erst dann mit letzterem zusammenbaubar ist.

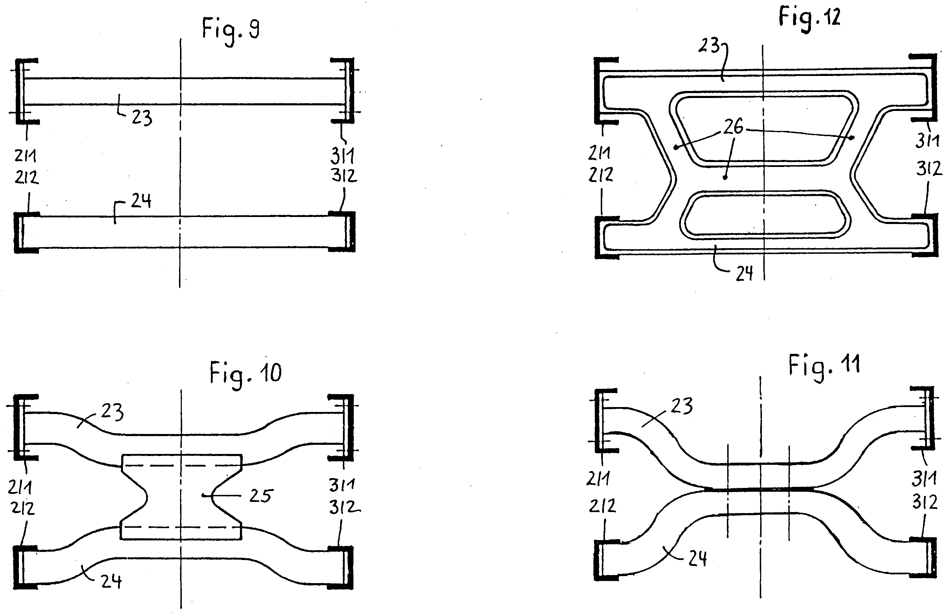

Die beiden Längsträger 2, 3 sind generell über an geeigneten Stellen angebrachte Querträger miteinander verbunden. Die Figuren 9 bis 12 zeigen verschiedene Querträgerkonstruktionen für die Ausführungsformen mit im mittleren Bereich zweigeteilten Längsträgern 2, 3 auf. Dabei können gerade oder gekröpfte, endseitig gegebenenfalls mit Anschlußflanschen versehene Querträger 23, 24 vorgesehen sein, die nicht (siehe Fig. 9) oder über ein Zwischenstück 25 (siehe Fig. 10) oder mittig direkt (siehe Fig. 11) miteinander verbunden sind und an denen die Längsträger-Teile jeweils endseitig angeschraubt, angenietet oder angeschweißt sind. Bei der Ausführungsform gemäß Fig. 12 sind die Querträger 23, 24 zusammen mit diese verbindenden Verstrebungen 26 durch ein Blechpreßteil realisiert, an das die Längsträger-Teile entweder angeschraubt, angenietet oder angeschweißt sind.

Darüber hinaus ermöglicht die Tieferlegung des vorderen Längsträger-Abschnittes 2/3, 3/3 auch eine besonders günstige Stoßfängeranordnung. Hierzu kann jeder der beiden Rahmen-Längsträger 2, 3 an seinem vorderen Endbereich eine Vertikalgabelung 17 aufweisen, an deren unterem Gabel-Teil 17/2 vorne über wenigstens einen in Höhe H3 einer Pkw-Stoßstange (siehe Fig. 1) angeordneten, in Rahmen-Längsrichtung nachgiebigen Energieabsorber 18 ein Stoßfänger 19 abgestützt ist. Das obere Gabel-Teil 17/1 dagegen endet in einer etwas über dem Normal-Niveau einer Pkw-Motorhaube gegebenen Höhe H2 und ist untenseitig derart gestaltet, daß ein frontal aufprallender Pkw unter Längsverschiebung des Stoßfängers 19 in diese im übrigen bauteil- bzw. aggregatfreie oder bauteilarme und dann nur mit längsweich (in Längsrichtung nachgiebig) am Rahmen befestigten Bauteilen bzw. Aggregaten ausgestattete Nutzfahrzeug-Knautschzone eintauchen kann, wobei durch den/die Energieabsorber 18 die Aufprallenergie verzehrbar ist.

Das - in den dargestellten Beispielen kippbare - Fahrerhaus 5 ist über Lagerböcke 21, 22 am Rahmen 1 gelagert, die durch eine Front-Blende oder zweiten Stoßfänger 20 abgedeckt sind. Dabei sind die vorderen Lagerböcke 21 in Höhenrichtung relativ kurz bauend am vorderen Endbereich des jeweiligen oberen Gabel-Teiles 17/1 eines Rahmen-Längsträgers 2, 3 angeordnet, während die hinteren Lagerböcke 22 jeweils etwa am Gabelungsbereich 12 bzw. Übergangsbereich zwischen nicht abgesenktem und vorderem abgesenkten Längsträger-Abschnitt angeordnet sind.

Der vordere abgesenkte Abschnitt 2/3, 3/3 jedes Längsträgers 2, 3 kann einschließlich der Gabelungen 12, 17 als einstückiges Blechpreßteil oder als Schweißkonstruktion aus vorgefertigten Blechpreßteilen realisiert werden.

Nachfolgend ist detailliert auf die Ausgestaltung des Nutzfahrzeuges die erfindungsgemäße Einzelradaufhängung betreffend eingegangen, und zwar unter Bezugnahme aufdie Fig. 15 bis 26.

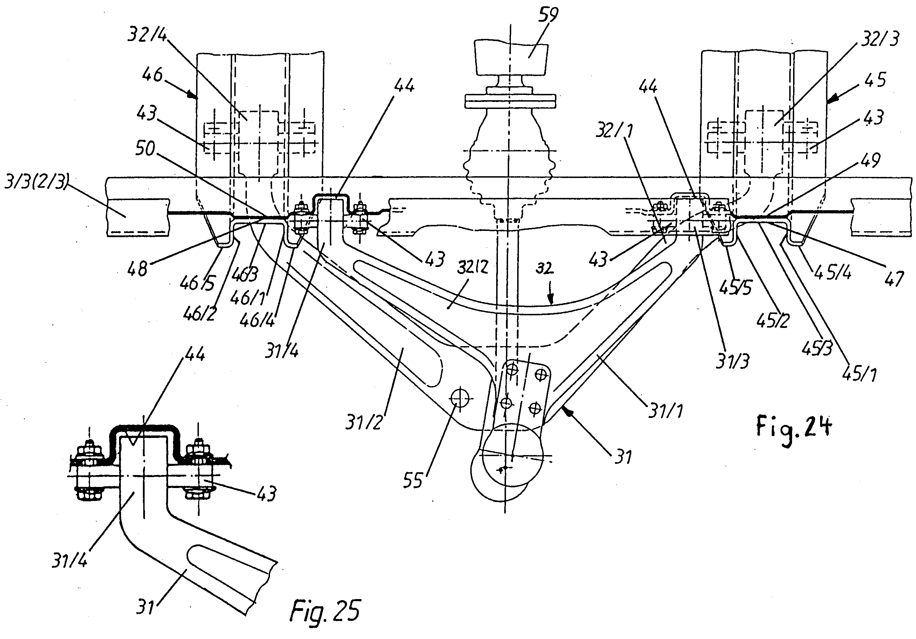

Für die Einzelaufhängung je Vorderrad 27, 28 sind zwei beabstandet übereinander in etwa parallelen Querebenen des Fahrzeuges wirkende Dreiecksquerlenker 29, 30 bzw. 31, 32 vorgesehen. Diese Dreiecksquerlenker sind innenendes jeweils am Rahmen 1 und außenendes, dort oben bzw. unten am Achsschenkel 33 bzw. 34 des jeweiligen Rades 27, 28 über ein Anschlußorgan 35, 36 bzw. 37, 38 angelenkt. Diese Anschlußorgane sind vorzugsweise jeweils von oben her auf einem entsprechenden Plateau 39, 40 bzw. 41, 42 des Achsschenkels 33 bzw. 34 aufgesetzt und an diesem befestigt. Die beiden Schenkel eines jeden Dreiecksquerlenkers sind mit 29/1, 29/2 bzw. 30/1, 30/2 bzw. 31/1, 31/2 bzw. 32/1, 32/2 bezeichnet. An den inneren Enden der Schenkel der Dreiecksquerlenker 29, 30 bzw. 31, 32 sind für deren Anlenkung Lageraugen 29/3, 29/4, 30/3, 30/4, 31/3, 31/4, 32/3, 32/4 gegeben, die sich quer zur Fahrzeug-Längsachse erstrecken, jeweils zueinander planparallele Seitenflächen sowie durchgehende Querbohrungen aufweisen, die jeweils von einem parallel zur Fahrzeug-Längsachse verlaufenden Pratzengelenk 43 durchdrungen werden. Wie deutlich aus Fig. 25 ersichtlich, besteht jedes dieser Pratzengelenke aus einem die Querbohrung des jeweiligen Lagerauges durchdringenden Mittelabschnitt und endseitigen Befestigungsaugen mit vorne und hinten planparallelen Anlageflächen und quer durchgehenden Bohrungen, wobei die Pratze mit ihren inneren Anlageflächen an der jeweiligen Anlagefläche des Rahmens anliegt und im Bereich derselben über eine eine dort gegebene Bohrung und die Querbohrung im Pratzenlagerauge durchdringende Verschraubung befestigt ist.

Wie desweiteren gut aus Fig. 15 und 24 ersichtlich, sind die beiden Schenkel der unteren Dreiecksquerlenker 30, 32 jeweils länger als die Schenkel der oberen Dreiecksquerlenker 29, 31. Außerdem ist der Abstand der Lageraugen der unteren Dreiecksquerlenker 30, 32 größer als jener der Lageraugen der oberen Dreiecksquerlenker 29, 31. Jeder obere Dreiecksquerlenker 29, 31 ragt mit seinen innenendes gegebenen Lageraugen 29/3, 29/4 bzw. 31/3, 31/4 in hierfür außen am vorderen Längsträger-Abschnitt 2/3, 3/3 gegebene Vertiefungen 44 (siehe insbes. Fig. 21) hinein, deren Seitenflächen 44/1, 44/2 (siehe Fig. 19) einen größeren lichten Abstand als die Seitenflächen der Lageraugen der oberen Dreiecksquerlenker 29, 31 haben.

Die Vertiefungen 44 können durch außermittig von außen her in einen schräg gestellten Steg-Abschnitt des vorderen Längsträger-Abschnittes 2/3, 3/3 nahe zum steifen Eckbereich mit dem Untergurt hingerückt eingepreßte Taschen gebildet sein. Die beiderseits einer solchen Tasche 44 an besagtem Steg-Abschnitt gegebenen Auflagen 44/3, 44/4 für das zugehörige Pratzengelenk 43 sind - wie gut aus Fig. 19 und 21 ersichtlich - außen an im Steg nach außen gepreßten Vorsprüngen entsprechend kalibriert. Alternativ hierzu können die Vertiefungen 44 für die Aufnahme der Lageraugen 29/3, 29/4; 31/3, 31/4 der oberen Dreiecksquerlenker 29, 31 auch jeweils durch den Freiraum zwischen zwei am Steg jedes vorderen Längsträger-Abschnittes 2/3, 3/3 entsprechend weit von innen nach außen herausgepreßten Vorsprüngen gegeben sein, an denen außen die Anlageflächen 44/3, 44/4 für das jeweils zugehörige Pratzengelenk 43 entsprechend kalibriert sind.

Für die rahmenseitige Anlenkung der unteren Dreiecksquerlenker 30, 32 sind - wie gut aus Fig. 15 und 24 ersichtlich - zwei die beiden vorderen Längsträger-Abschnitte 2/3, 3/3 verbindende, von vorne gesehen etwa V-förmig nach unten gezogene Querträger 45, 46 vorgesehen. Jeder dieser beiden V-förmig heruntergezogenen Querträger 45, 46 hat einen offenen U-T-Querschnitt, wobei - wie aus Fig. 17 ersichtlich - die Basis durch ein nach außen offenes U-Profil gebildet ist, an dessen beiden Seitenschenkeln 45/1, 45/2 bzw. 46/1, 46/2 sich außen abragende, zum U-Profil-Boden 45/3 bzw. 46/3 parallele, der Auflage und dem Anschluß der Pratzengelenke 43 der unteren Dreiecksquerlenker 30, 32 dienende T-Stege 45/4, 45/5 bzw. 46/4, 46/5 anschließen. Von vorne (siehe Fig. 15) gesehen weist dabei jeder der beiden Querträger 45, 46 folgende Form auf: An tiefster Stelle ist ein horizontal verlaufender Abschnitt 45/6 bzw. 46/6 mit einer gegenüber der Breite des Antriebsaggregates 4 größeren Länge gegeben, an dessen beiden Enden schräg nach oben außen gerichtete Schenkel 45/7, 45/8 bzw. 46/7, 46/8 abgehen. Deren obere Endbereiche sind gegenüber den unteren etwas steiler gestellt und bilden jene Abschnitte, mit denen der jeweilige Querträger 45, 46 außen mit seinem U-Profil-Boden 45/3 bzw. 46/3 an den vorderen Längsträger-Abschnitten 2/3, 3/3 außen anliegend befestigt - angeschraubt, angenietet oder angeschweißt - ist. Die vorderen Längsträger-Abschnitte 2/3, 3/3 sind hierzu an ihren Stegen - wie aus Fig. 15 und 23 ersichtlich - mit entsprechend angepaßten schrägen Anlageflächen 47, 48 ausgestattet, die an Ein- oder Ausbuchtungen 49, 50 des Profil-Steges (siehe Fig. 23) gegeben sein können.

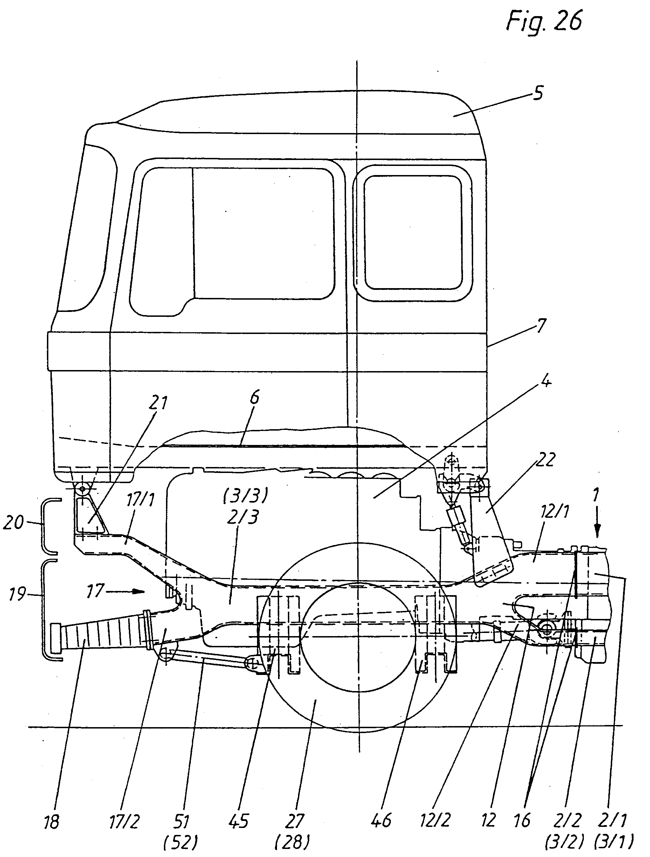

Die unteren Dreiecksquerlenker 30, 32 ragen mit ihren Lageraugen 30/3, 30/4 bzw. 32/3, 32/4 jeweils in den offenen U-Profil-Raum der beiden Querträger 45, 46 jeweils am unteren Ende von deren schrägen Schenkeln in Höhe des Horizontalabschnittes hinein (siehe Fig. 15 und 16). Die Anschlußstellen für die zugehörigen Pratzengelenke 43 sind dabei am unteren Ende der schrägen Schenkel 45/7, 45/8 bzw. 46/7, 46/8 an schrägen T-Steg-Abschnitten gegeben, was gut aus Fig. 15 ersichtlich ist. Die lichte Weite des offenen U-Profiles der beiden Querträger, gegeben durch dessen Seitenwände 45/1, 45/2 bzw. 46/1, 46/2, ist hierfür (wie aus Fig. 16 ersichtlich) etwas größer als der Abstand der Seitenflächen am jeweiligen Lagerauge 30/3, 30/4 bzw. 32/3, 32/4. Zusätzlich kann der in Fahrtrichtung vorwärts gesehen vordere Querträger 45 - wie aus Fig. 26 ersichtlich - über Längsstreben 51, 52 stabilisiert sein, die vorne am jeweils unteren Gabel-Teil 17/2 der Vertikalgabelung 17 und hinten am Horizontalabschnitt 45/6 des Querträgers 45 abgestützt angelenkt werden.

Die beiden Querträger 45, 46 können, wie dargestellt durch jeweils ein einstückiges Blechpreßteil oder ausjeweils zwei zur Fahrzeuglängsrichtung spiegelsymmetrischen, längs der Symmetrielinie zusammengeschweißten Blechpreßteilen realisiert sein.

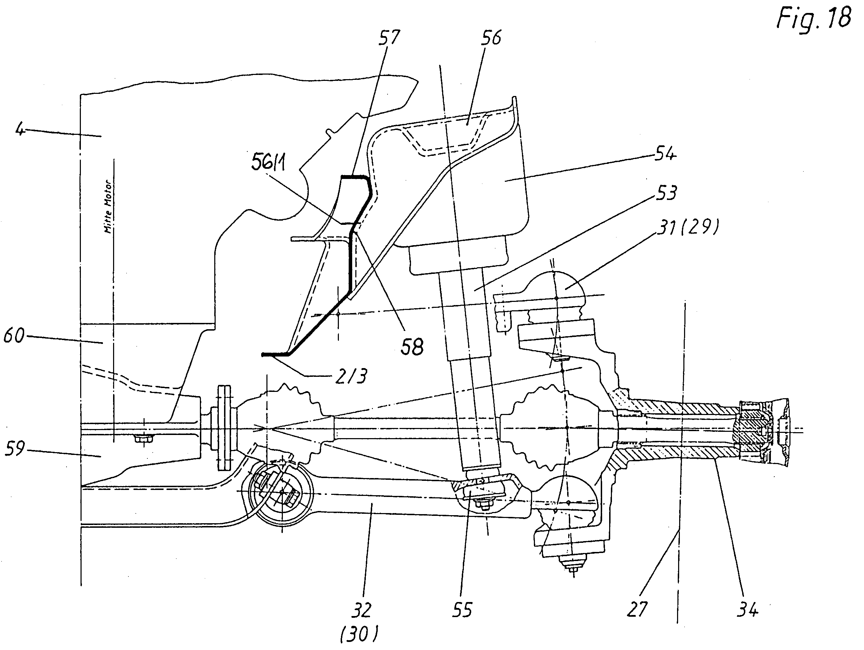

Die vorbeschriebene Art der Einzelradaufhängung eignet sich sowohl für nichtangetriebene als auch angetriebene gelenkte Vorderräder 27, 28. Außerdem erlaubt diese Art der Einzelradaufhängung auch eine besonders günstige Anordnung von Federungsorganen insbesondere einer Luftfederung, auf die nachfolgend noch näher eingegangen ist. Wie gut aus Fig. 18 ersichtlich, kommt für die Realisierung einer Luftfederung im Vorderachsbereich je Vorderrad 27, 28 eine mit einem Stoßdämpfer 53 kombinierte Luftfeder 54 zur Anwendung, wobei die Luftfeder 54 oben mit dem Stoßdämpfer 53 vereinigt ist, der an seinem unteren Ende am jeweils unteren (gegebenenfalls auch oberen) Dreiecksquerlenker 30 bzw. 32 am Übergangsbereich von dessen beiden Schenkeln abgestützt ist. Die diesbezüglichen Anschlußstellen sind in Fig. 18 und 24 mit 55 angezogen. Die Luftfeder 54 ist oben an einem Federbock 56 abgestützt und befestigt, der in spezieller Weise am vorderen Längsträger-Abschnitt 2/3 bzw. 3/3 angeschlossen ist. Für die Anbindung des Federbockes 56 ist dabei - wie aus Fig. 18, 19 und insbesondere 22 ersichtlich - jeder vordere Längsträger-Abschnitt 2/3, 3/3 an seinem Steg örtlich zwischen den Taschen 44 für die Anlenkung der oberen Dreiecksquerlenker 29, 31 nach oben und außen gezogen, siehe den diesbezüglichen Abschnitt 57, und mit einer Einbuchtung 58 versehen. An der Einbuchtung 58 und dem hochgezogenen Abschnitt 57 ist der Federbock 56 mit seinem formmäßig entsprechend angepaßten Anschlußbereich 56/1 angesetzt und befestigt, insbesondere angeschweißt.

Was die Lage des Antriebsaggregates 4 anbelangt, so ist dieses bei einem Frontlenker-Lastkraftwagen unterhalb des Fahrerhauses 5 im Bereich der beiden ihn unterquerenden Querträger 45, 46 gegeben und vorzugsweise außermittig zur Fahrzeug-Längsachse soweit wie möglich zu einem der beiden vorderen Längsträger-Abschnitte 2/3, 3/3 hingerückt angeordnet. Im Falle angetriebener Vorderräder 27, 28, wie in den Fig. 15, 18 und 24 dargestellt, ist das zugehörige Achsmittengetriebe (Ausgleichsdifferential 59) direkt vorn am Antriebsaggregat 4 unterhalb der Ölwanne 60 und vor dem Schwungradgehäuse angeschraubt. Das Tellerrad 61 (Fig. 15) des Achsmittengetriebes 59 ist dabei entgegengesetzt zur Seite der Antriebsaggregatverschiebung in Richtung gegenüberliegender Seite verschoben neben der Ölwanne 60 angeordnet. Aufgrund dieser Anordnung ergibt sich der geringste AbstandAntriebsaggregat/Achsmittengetriebe. Außerdem erspart das am Antriebsaggregat 4 angeschraubte Achsmittengetriebe 59 Befestigungsböcke am Rahmen 1. Alternativ hierzu kann das Achsmittengetriebe 59 auch an den beiden Querträgern 45, 46 befestigt werden, was eine andere, je nach Antriebsaggregat günstigere Lagerung desselben ermöglicht.

## Patentansprüche

1. Lastkraftwagen, insbesondere der Frontlenker-Bauart, mit einem Fahrgestell, dessen Rahmen aus zwei über Querträger verbundenen Längsträgern besteht und ein Fahrerhaus sowie ein Antriebsaggregatträgt, dadurch gekennzeichnet, daß die beiden Längsträger (2, 3) des Rahmens (1) vordere Abschnitte (2/3, 3/3) aufweisen, die zur Bildung eines von vorn gesehen V-förmigen Einbaubereiches für das Antriebsaggregat (4) in sich von der Vertikalen abweichend partiell schräg gestellt sowie für einen direkten Anschluß von Einzelradaufhängungsorganen mit entsprechenden Aus- und Einbuchtungen (44; 44/1, 44/2; 44/3, 44/4; 47 48; 49, 50; 57, 58) versehen sind, daß ferner für die Einzelaufhängung je Vorderrad (27, 28) zwei beabstandet in etwa parallelen Querebenen wirkende Dreiecksquerlenker (29, 30; 31, 32) vorgesehen sind, die außenendes oben bzw. unten am Achsschenkel (33, 34) des zugehörigen Vorderrades (27 bzw. 28), dort über ein Anschlußorgan (35, 36, 37, 38) angelenkt sind, daß außerdem die vorderen Abschnitte (2/3, 3/3) der beiden Längsträger (2, 3) durch zwei außen an letzteren angeschlossene, voneinander beabstandete und von vorn gesehen etwa V-förmig nach unten gezogene Querträger (45, 46) verbunden sind, daß weiterhin jeder obere Dreiecksquerlenker (29, 31) mit seinen innenendes gegebenen Lageraugen (29/3, 29/4; 31/3, 31/4) in hierfür außen an einem vorderen Längsträger-Abschnitt (2/3, 3/3) gegebene Vertiefungen (44) hineinragt und direkt an letzterem (2/3, 3/3) über dort außen angesetzte Pratzengelenke (43) befestigt ist, daß ferner jeder untere Dreiecksquerlenker (30, 32)
a) längere Schenkel (30/1, 30/2; 32/1, 32/2) mit weiter voneinander beabstandeten Lageraugen (30/3, 30/4; 32/3, 32/4) als der zugehörige obere Dreiecksquerlenker (29, 31) hat,
b) mit seinen beiden innenendes gegebenen Lageraugen (30/3, 30/4; 32/3, 32/4) am unteren Bereich der beiden nach unten gezogenen Querträger (45, 46) in deren nach außen offene Profilräume (45/1, 45/2, 45/3, 46/1, 46/2, 46/3) hineinragt, und
c) außen an anderen Profilabschnitten (45/4, 45/5; 46/4, 46/5) der Querträger (45, 46) über dort angesetzte Pratzengelenke (43) befestigt ist.

2. Lastkraftwagen nach Anspruch 1, dadurch gekennzeichnet, daß die vorderen Längsträger-Abschnitte (2/3, 3/3) zur noch stärkeren Tieferlegung des Antriebsaggregates (4) und Fahrerhauses (5) auch zumindest partiell auf ein gegenüber der im dahinter folgenden Fahrgestell-Abschnitt gegebenen Rahmenhöhe (H5) niedrigeres Niveau (H4), das dem 0,6-0,9-fachen der Rahmen-Höhe (H5) entspricht, abgesenkt sind.

3. Lastkraftwagen nach Anspruch 1, dadurch gekennzeichnet, daß die beiden Rahmen-Längsträger (2, 3) beginnend etwa im Bereich der Fahrerhaus-Rückwand (7) und ausgehend von der im hinteren Fahrgestell-Bereich gegebenen Rahmen-Höhe (H5) schräg nach unten gezogen sind und sich dann zumindest partiell auf tieferem Höhen-Niveau (H4) als abgesenkte Abschnitte (2/3, 3/3) nach vorne erstrecken.

4. Lastkraftwagen nach Anspruch 3, dadurch gekennzeichnet, daß das Nachunten-ziehen der Rahmen-Längsträger (2, 3) durch entsprechendes Abkröpfen derselben realisiert ist.

5. Lastkraftwagen nach Anspruch 3, dadurch gekennzeichnet, daß das Nachunten-ziehen der Rahmen-Längsträger (2, 3) durch Einschweißen eines schrägen Trägerteiles zwischen höher und tiefer liegenderem Längsträger-Abschnitt realisiert ist.

6. Lastkraftwagen nach einem der vorhergehenden Ansprüche, dadurch gekennzeichnet, daß zumindest jeder vordere Längsträger-Abschnitt (2/3, 3/3) einen etwa U-förmigen Querschnitt mit einem äußeren Steg und zwei davon einwärts zur Fahrzeugmitte hin gerichtet abgehenden Gurten - einen Obergurt und einen Untergurt - aufweist.

7. Lastkraftwagen nach Anspruch 1, dadurch gekennzeichnet, daß die Lageraugen der Dreiecksquerlenker (29, 30, 31, 32) sich quer zur Fahrzeug-Längsachse erstreckende parallele Seitenflächen aufweisen und die Längsachsen der die Lageraugen durchdringenden Pratzengelenke (43) parallel zur Fahrzeug-Längsachse verlaufen.

8. Lastkraftwagen nach Anspruch 1, dadurch gekennzeichnet, daß jeder der beiden V-förmig heruntergezogenen Querträger (45, 46) einen offenen U-T-Querschnitt hat, wobei die Basis durch ein nach außen offenes U-Profil gebildet ist, an dessen beiden Seitenschenkeln (45/1, 45/2; 46/1, 46/2) sich außen abragende, zum U-Profil-Boden (45/3, 46/3) parallele, für Anlage und Anschluß der die unteren Dreiecksquerlenker (30, 32) fixierenden Pratzengelenke (43) dienende T-Stege (45/4, 45/5; 46/4, 46/5) anschließen, wobei diese Querträger (45, 46) mit ihrem U-Profil-Boden am mit entsprechend schrägen, gegebenenfalls an Ein- oder Ausbuchtungen (49, 50) gegebenen Anlageflächen (47, 48) versehenen Steg der vorderen Längsträger-Abschnitte (2/3, 3/3) außen anliegend befestigt - angeschraubt, angenietet oder angeschweißt - sind.

9. Lastkraftwagen nach Anspruch 8, dadurch gekennzeichnet, daß jeder der beiden Querträger (45, 46) - von vorne gesehen - einen an tiefster Stelle gegebenen, gegenüber der Breite des Antriebsaggregates (4) größeren Horizontalabschnitt (45/6, 46/6) aufweist, an dessen beiden Enden schräg nach oben außen gerichtete Schenkel (45/7, 45/8; 46/7, 46/8) abgehen, deren obere Endbereiche gegenüber den unteren etwa steiler gestellt sind und jene Abschnitte bilden, mit denen die Querträger (45, 46) außen an den Stegen der vorderen Längsträger-Abschnitte (2/3, 3/3) befestigt sind, dagegen die Anschlußstellen für die zur Fixierung der unteren Dreiecksquerlenker (30, 32) dienenden Pratzengelenke (43) am unteren Ende der schrägen Schenkel (45/7, 45/8; 46/7, 46/8) durch schräge T-Steg-Abschnitte gegeben sind.

10. Lastkraftwagen nach einem der Ansprüche 7 bis 9, dadurch gekennzeichnet, daß jeder der beiden V-förmigen Querträger (45, 46) durch ein Blechpreßteil realisiert ist.

11. Lastkraftwagen nach einem der Ansprüche 7 bis 9, dadurch gekennzeichnet, daß jeder der beiden V-förmigen Querträger durch zwei zur Fahrzeuglängsachse spiegelsymmetrische und längs der Symmetrielinie zusammengeschweißte Blechpreßteile realisiert ist.

12. Lastkraftwagen nach einem der Ansprüche 6 bis 9, dadurch gekennzeichnet, daß die Vertiefungen (44) für die Aufnahme der Lageraugen (29/3, 29/4; 31/3, 31/4) der oberen Dreiecksquerlenker (29, 31) durch außenmittig von außen her in die Stege der vorderen Längsträger-Abschnitte (2/3, 3/3), nach unten nahe zum steifen Eckbereich mit dem Untergurt hingerückt eingepreßte Taschen gebildet sind, und daß die beiderseits jeder Tasche am Steg gegebenen Auflagen (44/3, 44/4) für das jeweilige Pratzengelenk (43) an im Steg nach außen gepreßten Vorsprüngen entsprechend kalibriert sind.

13. Lastkraftwagen nach einem der Ansprüche 6 bis 9, dadurch gekennzeichnet, daß die beiden Vertiefungen (44) für die Aufnahme der Lageraugen (29/3, 29/4; 31/3, 31/4) der oberen Dreiecksquerlenker (29, 31) jeweils durch den Freiraum zwischen zwei am Steg jedes vorderen Längsträger-Abschnittes (2/3, 3/3) entsprechend weit von innen nach außen herausgepreßten Vorsprüngen gegeben sind, an denen außen die Auflageflächen (44/3, 44/4) für das jeweils zugehörige Pratzengelenk (43) entsprechend kalibriert sind.

14. Lastkraftwagen nach einem der Ansprüche 7 bis 13, dadurch gekennzeichnet, daß die lichte Weite der Vertiefungen (44) in bzw. an den Stegen der vorderen Längsträger-Abschnitte (2/3, 3/3) und die lichte Weite des U-Profil-Raumes in den beiden V-förmigen Querträgern (45, 46) jeweils etwas größer als die durch den Abstand ihrer parallelen Seitenflächen gegebene Breite der Lageraugen der Dreiecksquerlenker ist.

15. Lastkraftwagen nach Anspruch 1, dadurch gekennzeichnet, daß bei Vorsehen einer Luftfederung zur Anbindung eines die Luftfeder (54) je Vorderrad (27, 28) oben abstützenden Federbockes (56) jeder vordere Längsträger-Abschnitt (2/3, 3/3) örtlich nach oben und außen gezogen (57) und mit einer von außen her eingepreßten Einbuchtung (58) versehen ist, an welcher Profilierung (57, 58) der Federbock (56) mit seinem Anschlußbereich (56/1) formmäßig entsprechend angepaßt und befestigt ist, und daß jede Luftfeder (54) oben mit einem Stoßdämpfer (53) vereinigt ist, der unten an einem der zugehörigen Dreiecksquerlenker (29, 30 bzw. 31, 32) am Übergangsbereich von dessen beiden Schenkeln abgestützt angelenkt ist.

16. Lastkraftwagen nach Anspruch 1, dadurch gekennzeichnet, daß das bei einem Frontlenker-Lastkraftwagen unterhalb des Fahrerhauses (5) gegebene Antriebsaggregat (4) im Bereich der beiden ihn unterquerenden Querträger (45, 46) außermittig zur Fahrzeug-Längsachse und soweit wie möglich zu einem der beiden Längsträger-Abschnitte (2/3, 3/3) hin gerückt angeordnet ist.

17. Lastkraftwagen nach Anspruch 16, dadurch gekennzeichnet, daß bei angetriebenen Vorderrädern (27, 28) das zugehörige Achsmittengetriebe (Ausgleichsdifferential 59) direkt vorn am Antriebsaggregat (4) unterhalb der Ölwanne (60) und vor dem Schwungradgehäuse angeschraubt und das Tellerrad (61) des Achsmittengetriebes (59) entgegengesetzt zur Seite der Antriebsaggregatverschiebung in Richtung gegenüberliegende Seite verschoben angeordnet ist.

18. Lastkraftwagen nach Anspruch 16, dadurch gekennzeichnet, daß bei angetriebenen Vorderrädern (27, 28) das zugehörige Achsmittengetriebe (Ausgleichsdifferential 59) an den beiden V-förmigen Querträgern (45, 46) befestigt ist.

19. Lastkraftwagen nach einem der vorhergehenden Ansprüche, dadurch gekennzeichnet, daß am vorderen Endbereich jedes vorderen Längsträger-Abschnittes (2/3, 3/3) eine Vertikalgabelung (17) gegeben ist, an deren unterem Gabel-Teil (17/2) vorne über einen oder mehrere in Rahmen-Längsrichtung nachgiebige(n), in Höhe (H3) einer Pkw-Stoßstange angeordnete(n) Energieabsorber (18) ein Stoßfänger (19) abgestützt ist, dagegen das obere Gabel-Teil (17/1) in einer etwas über dem Normalniveau einer Pkw-Motorhaube gegebenen Höhe (H2) endet und untenseitig derart gestaltet ist, daß ein frontal aufprallender Pkw in diese im übrigen bauteil- bzw. aggregatfreie oder zumindest bauteil- bzw. aggregatarme und dann nur mit längsweich am Rahmen befestigten Bauteilen/Aggregaten ausgestattete Nutzfahrzeug-Knautschzone eintauchen kann, wobei durch den/die Energieabsorber (18) die Aufprallenergie verzehrbar ist.

20. Lastkraftwagen nach Anspruch 19, dadurch gekennzeichnet, daß der vordere der beiden zur Anlenkung der unteren Dreiecksquerlenker (30, 32) dienende Querträger (45) durch einenendes unten an diesem und andernendes am jeweils unteren Gabel-Teil (17/2) der vorderen Vertikalgabelung (17) abgestützt angelenkte Längsstreben (51, 52) in Fahrzeug-Längsrichtung stabilisiert ist.

## Claims

1. A lorry, more particularly with a forward control chassis, comprising a chassis whose frame is formed by two longitudinal supports connected by transverse supports and supports a driver's cab and a drive unit, characterised in that the two longitudinal supports (2, 3) of the frame (1) comprise front sections (2/3, 3/3), which are arranged partially at an angle deviating from the vertical to form an installation area, which is V-shaped from the front, for the drive unit (4), and which, for a direct connection of independent wheel suspension members, are provided with corresponding recesses and protuberances (44; 44/1, 44/2, 44/3, 44/4; 47, 48; 49, 50; 57, 58), furthermore for the independent suspension each front wheel (27, 28) is provided with two spaced-apart triangular transversal pivotal arms (29, 30; 31, 32), which act in approximately parallel transverse planes and are articulatedly connected at their outer ends to the top or bottom of the axle journal (33, 34) of the associated front wheel (27 or 28) via a connecting member (35, 36, 37, 38), in addition the front sections (2/3, 3/3) of the two longitudinal supports (2, 3) are connected by two spaced-apart, downwardly bent transverse supports (45, 46), which are approximately V-shaped from the front and are connected to the outside of the longitudinal supports (2, 3), furthermore each upper triangular transversal pivotal arm (29, 31) projects with its inner bearing eyelets (29/3, 29/4; 31/3, 31/4) into recesses (44) provided to this end on the outside of a front longitudinal support section (2/3, 3/3) and is secured directly to the latter (2/3, 3/3) via externally fitted claw joints (43), furthermore each lower triangular transversal pivotal arm (30, 32)
a) comprises longer limbs (30/1, 30/2; 32/1, 32/2) with bearing eyelets (30/3, 30/4; 32/3, 32/4) spaced further apart than the associated upper triangular transverse pivotal arm (29, 31),
b) projects with its two inner bearing eyelets (30/3, 30/4; 32/3, 32/4) in the lower region of the two downwardly bent transverse supports (45, 46) into the outwardly open profile chambers (45/1, 45/2, 45/3, 46/1, 46/2, 46/3) thereof, and
c) is secured on the outside to other profile sections (45/4, 45/5; 46/4, 46/5) of the transverse supports (45, 46) via claw joints (43) fitted at this location.

2. A lorry according to claim 1, characterised in that, in order to further reduce the height of the drive unit (4) and driver's cab (5), the front longitudinal support sections (2/3, 3/3) are at least partially lowered to a height (H4) which is lower than the frame height (H5) in the following chassis section and corresponds to 0.6-0.9 times the frame height (H5).

3. A lorry according to claim 1, characterised in that the two longitudinal frame supports (2, 3) are downwardly bent at an angle, beginning approximately in the region of the driver's cab rear wall (7) and extending from the frame height (H5) in the rear chassis region, and then extend forwards at least partially at a lower height (H4) than the lowered sections (2/3, 3/3).

4. A lorry according to claim 3, characterised in that the downward angling of the longitudinal frame supports (2, 3) is realised by a corresponding cranking of said supports.

5. A lorry according to claim 3, characterised in that the downward angling of the longitudinal frame supports (2, 3) is realised by welding an inclined support element between higher and lower-lying longitudinal support sections.

6. A lorry according to one of the preceding claims, characterised in that at least each front longitudinal support section (2/3, 3/3) has an approximately U-shaped cross section with an outer web and two chords - an upper and lower chord - extending inwards from the U-shaped cross section towards the centre of the vehicle.

7. A lorry according to claim 1, characterised in that the bearing eyelets of the triangular transverse pivotal arms (29, 30, 31, 32) comprise parallel lateral surfaces extending transversely to the vehicle longitudinal axis, and the longitudinal axes of the claw joints (43) penetrating the bearing eyelets extend parallel to the vehicle longitudinal axis.

8. A lorry according to claim 1, characterised in that each of the two transverse supports (45, 46) downwardly bent in a V-shape has an open U-T cross section, the base being formed by an outwardly open U-profile, adjoining two lateral limbs (45/1, 45/2; 46/1, 46/2) thereof are outwardly projecting T-webs (45/4, 45/5; 46/4, 46/5), which are parallel to the U-profile base (45/3, 46/3) and are used for bearing and connecting the claw joints (43) securing the lower triangular transversal pivotal arms (30, 32), the transverse supports (45, 46) being secured with their U-profile base, by screwing, riveting or welding, to the outside of the web of the front longitudinal support sections (2/3, 3/3), which web is provided with correspondingly inclined bearing surfaces (47, 48) optionally provided in recesses or on protuberances (49, 50).

9. A lorry according to claim 8, characterised in that each of the two transverse supports (45, 46) - viewed from the front - comprises at its lowermost point a horizontal section (45/6, 46/6) which is larger than the width of the drive unit (4), upwardly inclined and outwardly pointing limbs (45/7, 45/8; 46/7, 46/8) extending from both ends of said horizontal section, the upper end regions of the limbs (45/7, 45/8; 46/7, 46/8) extending at a steeper angle than the lower end regions and forming the sections by means of which the transverse supports (45, 46) are secured to the outside of the webs of the front longitudinal support sections (2/3, 3/3), whilst the connection sites for the claw joints (43) used for securing the lower triangular transversal pivotal arms (30, 32) are provided at the lower end of the inclined limbs (45/7, 45/8; 46/7, 46/8) by inclined T-web sections.

10. A lorry according to one of claims 7 to 9, characterised in that each of the two V-shaped transverse supports (45, 46) is realised by a stamped sheet metal part.

11. A lorry according to one of claims 7 to 9, characterised in that each of the two V-shaped transverse supports is realised by two stamped sheet metal parts which are mirror-symmetrical to the longitudinal axis of the vehicle and are welded together along the line of symmetry.

12. A lorry according to one of claims 6 to 9, characterised in that the recesses (44) for receiving the bearing eyelets (29/3, 29/4; 31/3, 31/4) of the upper triangular transverse pivotal arms (29, 31) are formed by pockets, which are pressed off-centre from the outside into the webs of the front longitudinal support sections (2/3, 3/3), displaced downwards into the vicinity of the rigid corner regions with the lower chord, and the bearing surfaces (44/3, 44/4) provided either side of each pocket on the web for the respective claw joint (43) are correspondingly calibrated on projections pressed outwards into the web.

13. A lorry according to one of claims 6 to 9, characterised in that the two recesses (44) for receiving the bearing eyelets (29/3, 29/4; 31/3, 31/4) of the upper triangular transversal pivotal arms (29, 31) are formed in each case by the space between two projections which are pressed a corresponding distance from the inside outwards into the web of each front longitudinal support section (2/3, 3/3), the bearing surfaces (44/3, 44/4) on the outside of the projections for the respective claw joint (43) being correspondingly calibrated.

14. A lorry according to one of claims 7 to 13, characterised in that the clear width of the recesses (44) in or on the webs of the front longitudinal support sections (2/3, 3/3) and the clear width of the U-profile cavity in the two V-shaped transverse supports (45, 46) is somewhat larger in each case than the width of the bearing eyelets of the triangular transversal pivotal arm determined by the distance between the parallel lateral surfaces of the transverse supports (45, 46).

15. A lorry according to claim 1, characterised in that, in cases where pneumatic suspension is provided, for connecting a spring block (56) which supports the air spring (54) of each front wheel (27, 28) from above, each front longitudinal support section (2/3, 3/3) is bent (57) upwards and outwards locally and is provided with a cavity (58), pressed from the outside inwards, to which profiling (57, 58) of the spring block (56) is correspondingly matched in shape and secured with its connection region (56/1), and each air spring (54) is connected to the top of a shock absorber (53), which is articulatedly connected at the bottom to one of the associated triangular transversal pivotal arms (29, 30 or 31, 32), supported in the transition region by the two limbs thereof.

16. A lorry according to claim 1, characterised in that the drive unit (4) arranged beneath the driver's cab (5) in a lorry with forward control is arranged in the region of the two transverse supports (45, 46) crossing beneath the drive unit off-centre of the vehicle longitudinal axis and as close as possible to one of the two longitudinal support sections (2/3, 3/3).

17. A lorry according to claim 16, characterised in that, in the case of driven front wheels (27, 28), the associated axle centre gearing (differential gearing 59) is screwed directly at the front to the drive unit (4) beneath the oil tank (60) and in front of the flywheel housing, and the ring gear (61) of the axle centre gearing (59) is arranged offset in the direction of the side opposite the side of the displacement of the drive unit.

18. A lorry according to claim 16, characterised in that, in the case of driven front wheels (27, 28), the associated axle centre gearing (differential gearing 59) is secured to the two V-shaped transverse supports (45, 46).

19. A lorry according to one of the preceding claims, characterised in that a vertical fork (17) is provided at the front end region of each front longitudinal support section (2/3, 3/3), a bumper (19) being supported at the front of the lower fork section (17/2) via one or more energy absorbers (18) arranged at the height (H3) of a car bumper and yielding in the longitudinal direction of the frame, whilst the upper fork section (17/1) ends at a height (H2) somewhat above the normal level of a car bonnet and is constructed on its underside in such a manner that a frontally impacting car can be accommodated in this commercial vehicle crumple zone, which is free of components or aggregates or has few components or aggregates which are then only secured along the length of the frame, the impacting energy being dissipated by the energy absorber(s) (18).

20. A lorry according to claim 19, characterised in that the front of the two transverse supports (45) used for the articulated connection of the lower triangular transverse pivotal arms (30, 32) is stabilised in the longitudinal direction of the vehicle by articulatedly connected longitudinal struts (51, 52) supported at one end to the bottom of the transverse support (45) and at the other end to the lower fork section (17/2) of the front vertical fork (17).

## Revendications

1. Camion notamment à cabine avancée, comprenant un châssis dont le cadre se compose de deux longeron reliés par des traverses portant une cabine et un groupe moteur, caractérisé en ce que les longeron (2, 3) du cadre (1) comportent des segments avant (2/3, 3/3) pour former une zone d'installation ayant en vue de face une forme de V pour le groupe moteur (4),et munis de cavités et des bossages (44 ; 44/1, 44/2 ; 44/3, 44/4 ; 47, 48 ; 49, 50 ; 57, 58) pour raccorder directement des organes de suspension de roues indépendantes, et en ce qu'en outre la suspension de roues indépendantes comprend pour chaque roue avant (27, 28), dans deux plans transversaux sensiblement parallèles, distants, des bras transversaux triangulaires (29, 30, 31, 32) reliés à l'extrémité extérieure en haut et en bas à la fusée (33, 34) de la roue avant correspondante (27, 28) en y étant articulés par des organes de liaison (35, 36, 37, 38) et en outre les segments avant (2/3, 3/3) des deux longeron (2, 3) sont reliés par deux traverses (45, 46), fixées extérieurement aux longerons, distantes l'une de l'autre et tirées vers le bas suivant une forme de V en vue de face, et en outre chacun des deux bras transversaux triangulaires supérieurs (29, 31) pénètre avec ses oeillets de palier de l'extrémité intérieure (29/3,29/4 ; 31/3, 31/4) dans des cavités (44) prévues extérieurement sur un segment de longeron avant (2/3, 3/3), et ils sont fixés directement à celui-ci (2/3, 3/3) par des articulations à pattes (43) rapportées de l'extérieur et chacun des bras transversaux triangulaires inférieurs (30, 32) comporte :
a) des branches plus longues (30/1, 30/2 ; 32/1, 32/2) avec des oeillets de palier (30/3, 30/4 ; 32/3, 32/4) écartés plus l'un de l'autre que pour les bras transversaux triangulaires supérieurs correspondants (29, 31);
b) ces deux oeillets de palier intérieurs (30/3, 30/4 ; 32/3, 32/4) dans la zone inférieure des deux traverses (45, 46) tirées vers le bas, en pénétrant dans les cavités de profilé ouvertes vers l'extérieur (45/1, 45/2 ; 45/3, 46/1, 46/2, 46/3) et,
c) à l'extérieur sur les autres segments de profilé (45/4, 45/5 ; 46/4, 46/5) des traverses (45, 46), la fixation se fait par des articulations à pattes (45) rapportées à cet endroit.

2. Camion selon la revendication 1, caractérisé en ce que, pour abaisser encore plus le groupe moteur (4) et la cabine (5) les segments avant de longeron (2/3, 3/3), sont abaissés au moins partiellement à un niveau (H4) plus faible que la hauteur (H5) du cadre définie par le segment de châssis suivant, niveau qui correspond à 0,6-0,9 fois la hauteur (H5) du cadre.

3. Camion selon la revendication 1, caractérisé en ce que les deux longeron de cadre (2, 3) sont tirés en biais vers le bas en commençant sensiblement au niveau de la cloison arrière (7) de la cabine et en partant de la hauteur de cadre (H5) correspondant à la zone arrière du châssis, et s'étendent vers l'avant, au moins partiellement au niveau (H4) plus bas que le segment abaissé (2/3, 3/3).

4. Camion selon la revendication 3, caractérisé en ce que l'abaissement des longeron de cadre (2, 3) est réalisé par un cintrage de ceux-ci.

5. Camion selon la revendication 3, caractérisé en ce que l'abaissement des longeron de cadre (2, 3) se fait en soudant une partie de longeron en biais entre le segment haut et le segment bas du longeron.

6. Camion selon des revendications précédentes, caractérisé en ce qu'au moins chacun des segments avant de longeron (2/3, 3/3) a une section sensiblement en forme de U avec une branche extérieure et deux ceintures partant vers l'intérieur et le milieu du véhicule (ceinture supérieure et ceinture inférieure).

7. Camion selon la revendication 7, caractérisé en ce que les oeillets de palier des bras transversaux triangulaires (29, 30, 31, 32) présentent des surfaces latérales parallèles s'étendant transversalement à l'axe longitudinal du véhicule et les axes longitudinaux des articulations de patte (43) traversant les oeillets de palier sont parallèles à l'axe longitudinal du véhicule.

8. Camion selon la revendication 1, caractérisé en ce que chacune des deux traverses (45, 46) tirée vers le bas en forme de V présente une section U-T ouverte, la base étant formée par un profilé en U ouvert vers l'extérieur et dont les deux branches latérales (45/1, 45/2 ; 46/1, 46/2) se poursuivent par des entretoises T (45/4, 45/5 ; 46/4, 46/5), en bossage vers l'extérieur, parallèles au fond du profilé en U (45/3, 46/3), pour servir d'appui et de moyen de liaison des articulations à patte (43) fixant les bras transversaux triangulaires inférieurs (30, 32), les traverses (45, 46) étant fixées par leur fond de profilé en U sur les surfaces d'appui (47, 48) inclinées de manière correspondante, munies le cas échéant de bossages et de cavités (49, 50), sur la branche des segments avant de longeron (2/3, 3/3), en étant appliquées à l'extérieur, la fixation se faisant par vissage, rivetage ou soudage.

9. Camion selon la revendication 8, caractérisé en ce que chacune des deux traverses (45, 46) (en vue de devant) présente à son point le plus bas un segment horizontal (45/6, 46/6) plus grand que la largeur du groupe moteur (4) et dont les deux extrémités se poursuivent par des branches (45/7, 45/8, 46/8, 48/8) inclinées vers le haut et vers l'extérieur avec une extrémité supérieure plus pentue que la partie inférieure et formant des segments avec lesquels les traverses (45, 46) sont fixées extérieurement aux entretoises des segments avant de longeron (2/3, 3/3) alors que les points de raccordement pour les articulations à pattes (43) servant à la fixation des bras transversaux triangulaires inférieurs (30, 32) sont constitués par les segments d'entretoise T, inclinés, à l'extrémité inférieure des branches inclinées (45/7, 45/8 ; 46/7, 46/8).

10. Camion selon l'une des revendications 7 à 9, caractérisé en ce que chacune des deux traverses (45, 46) en forme de V est constitué par une pièce en tôle pressée.

11. Camion selon l'une des revendications 7 à 9, caractérisé en ce que chacune des deux traverses en forme de V est constituée par deux pièces en tôle pressée, symétriques, planes par rapport à un plan passant par l'axe longitudinal du véhicule et réunies par soudage suivant le plan de symétrie.

12. Camion selon l'une des revendications 6 à 9, caractérisé en ce que les cavités (44) recevant les oeillets de palier (29/3, 29/4 ; 31/3, 31/4) des bras transversaux triangulaires supérieurs (29, 31) sont formées par des poches, excentrées, enfoncées de l'extérieur dans l'âme des segments avant de longeron (2/3, 3/3), vers le bas, vers la zone de coin rigide, dans la ceinture inférieure, et en ce que les appuis (44/3, 44/4) prévus de part et d'autre d'une poche sur l'entretoise, pour chaque articulation à pattes (43) sont des bossages calibrés, pressés dans l'entretoise, vers l'extérieur.

13. Camion selon l'une des revendications 6 à 9, caractérisé en ce que les cavités (44) recevant les oeillets de palier (29/3, 29/4 ; 31/3, 31/4) des bras transversaux triangulaires supérieurs (29, 31) sont formées chaque fois par l'espace libre entre deux bossages prévus sur l'entretoise de chaque segment avant de longeron (2/3, 3/3), et qui sont pressées d'une longueur correspondante, de l'intérieur vers l'extérieur, et sur lesquelles, les surfaces d'appui (44/3, 44/4) sont calibrées de l'extérieur pour l'articulation de pattes respectives (43).

14. Camion selon l'une des revendications 7 à 13, caractérisé en ce que la largeur libre des cavités (44) d'angle sur les entretoises des segments avant de longeron (2/3, 3/3) et la largeur libre du volume du profilé en U dans les deux traverses (45, 46) en forme de V est chaque fois supérieure à la largeur des oeillets de palier des bras transversaux triangulaires, cette largeur étant définie par l'écartement des surfaces latérales parallèles.

15. Camion selon la revendication 1, caractérisé en ce qu'en cas de suspension pneumatique, pour le montage d'un bloc de ressort (56) qui s'appuie sur le dessus du ressort pneumatique (54) de chaque roue avant (27, 28), chaque segment avant de longeron (2/3, 3/3) est tiré localement vers le haut et vers l'extérieur (57) et comporte une cavité (58) enfoncée de l'extérieur, recevant et fixant le profil (57, 58) du bloc à ressort (56) avec sa zone de raccordement (56/1) par une liaison de forme, et chaque ressort pneumatique (54) est réuni en partie supérieure à un amortisseur (53) articulé en partie inférieure à l'un des bras transversaux triangulaires correspondants (29, 30, 31, 32), au passage entre ses deux branches, avec appui.

16. Camion selon la revendication 1, caractérisé en ce que dans le cas d'une cabine avancée, le groupe moteur (4) situé sous la cabine (5) est au niveau des deux traverses (45, 46) passant sous le groupe moteur, de façon excentrée par rapport à l'axe longitudinal du véhicule et repoussées aussi loin que possible vers l'un des deux segments de longeron (2/3, 3/3).

17. Camion selon la revendication 16, caractérisé en ce que dans le cas de roues avant motrices (27, 28), la transmission en milieu d'essieu, correspondante (différentiel de compensation 59) est vissée directement à l'avant du groupe moteur (4), sous la bâche à huile (60) et en avant du carter du volant d'inertie et la roue solaire (61) de la transmission du milieu d'essieu est prévue à l'opposé de la direction de décalage du groupe moteur, décalée vers le côté opposé.

18. Camion selon la revendication 16, caractérisé en ce que dans le cas de roues avant motrices (27, 28), la transmission de milieu d'essieu correspondante (différentiel de compensation 59) est fixée aux deux traverses (45, 46) en forme de V.

19. Camion selon l'une des revendications précédentes, caractérisé en ce que dans la zone d'extrémité avant de chaque segment avant de longeron (2/3, 3/3), il y une fourche verticale (17) dont la partie inférieure de fourche (17/2) porte à l'avant, un pare-chocs (19) par l'intermédiaire d'un ou plusieurs dispositifs absorbant l'énergie (18), qui peuvent céder dans la direction longitudinale du cadre et se trouvent à la hauteur (H4) d'un pare-chocs de véhicule de tourisme alors que la partie supérieure de fourche (17/1) se trouve sensiblement au-dessus du niveau normal de la hauteur (H2) d'un capot de voiture de tourisme, et sa face inférieure est conçue pour qu'un véhicule de tourisme entrant en collision frontale puisse pénétrer dans la zone d'écrasement du camion, qui du reste ne comporte pas d'équipements ou d'accessoire ou du moins peu d'équipement et d'accessoires qui ne sont montés qu'avec des fixations souples dans la direction longitudinale, de manière à dissiper l'énergie de la collision par le ou les dispositifs absorbant l'énergie 18.

20. Camion selon la revendication 19, caractérisé en ce que la traverse avant (45) des deux traverses servant au montage articulé des bras transversaux triangulaires inférieurs (30, 32) est stabilisée à une extrémité, dans la direction longitudinale du véhicule par des entretoises longitudinales appuyées de manière articulée par une extrémité en bas de cette traverse et par l'autre extrémité à la partie inférieure (17/2) de la fourche verticale avant (17).
